(19) Europäisches Patentamt
European Patent Office
Office européen des brevets

(11) Veröffentlichungsnummer: **0 278 442**
**A2**

(12) # EUROPÄISCHE PATENTANMELDUNG

(21) Anmeldenummer: 88101759.4

(51) Int. Cl.[4]: G11B 7/24

(22) Anmeldetag: 06.02.88

(30) Priorität: 11.02.87 DE 3704122

(43) Veröffentlichungstag der Anmeldung:
17.08.88 Patentblatt 88/33

(84) Benannte Vertragsstaaten:
CH DE FR GB IT LI NL SE

(71) Anmelder: BASF Aktiengesellschaft
Carl-Bosch-Strasse 38
D-6700 Ludwigshafen(DE)

(72) Erfinder: Schrott, Wolfgang, Dr.
Bruesseler Ring 45
D-6700 Ludwigshafen(DE)
Erfinder: Neumann, Peter, Dr.
Franz-Schubert-Strasse 1
D-6908 Wiesloch(DE)

(54) **Optisches Aufzeichnungsmedium, enthaltend reflektierenden Graphit als Substrat.**

(57) Optisches Aufzeichungsmedium, enthaltend eine Speicherschicht, die als strahlungsempfindliches Material einen oder mehrere Farbstoffe enthält, eine Substratschicht I und gegebenenfalls eine oder zwei zusätzliche Substratschichten II, wobei die Substratschicht I im wesentlichen aus reflektierendem Graphit besteht.

EP 0 278 442 A2

## Optisches Aufzeichnungsmedium, enthaltend reflektierenden Graphit als Substrat

Die vorliegende Erfindung betrifft ein neues optisches Aufzeichungsmedium, enthaltend eine strahlungsempfindliche Speicherschicht, die einen oder mehrere Farbstoffe enthält, und reflektierenden Graphit als Substrat.

Für die dokumentarische Archivierung großer Mengen von Daten und Informationen besteht ein zunehmender Bedarf an solchen Systemen, die dies auf kleinstem Raum und mit möglichst geringer Zugriffszeit ermöglichen. Mit der Verfeinerung der Halbleiterlasertechnologie hat die Entwicklung von optischen Speichermedien sowie von Schreib-und Lesevorrichtungen eingesetzt, die den herkömmlichen magnetischen Medien in vielen Punkten überlegen sind.

Als optische Speichermedien sind sowohl lesbare (Read Only Memories -ROM), einmal beschreib-und lesbare (Write Once Read Many Times - WORM) und löschbare (erasable) Medien prinzipiell bekannt. Ihre Herstellung ist jedoch sehr aufwendig. Dies betrifft sowohl die Herstellung und Reinigung der verwendeten Speichermaterialen, als auch die Herstellung des Speichers (Dünnschichttechnologie, z. B. Sputtern, Vakuumverdampfen oder Spincoating mit definierten Schichtdicken). Darüberhinaus bereiten viele Speichermaterialen Probleme im Bereich der Langzeitstabilität durch Oxidationsempfindlichkeit oder Morphologieinstabilität (Rekristallisation amorpher Schichten).

Als Datenspeicher eignen sich neben Bändern vor allem Karten und Scheiben (Compact Discs), da sie auf kleinstem Raum eine große Menge an Daten und Informationen aufnehmen können, die beliebig oft und mit sehr geringer Zugriffszeit abgerufen werden können. Darüberhinaus verfügen sie über eine große Langzeitstabilität.

Die bisher bekannten optischen Speicher verwenden als laserlichtempfindliche Schicht entweder durch Vakuumtechnologie aufgebrachte anorganische (z. B. Tellur/Tellursuboxide) oder organische Absorbermaterialien (z. B. Vanadylphthalocyanin) oder auch aufschleuderbare organische Farbstoffe. Solche Schichten können darüber hinaus noch Bindemittel oder andere Zusatzstoffe enthalten.

Die meisten organischen Farbstoffe benötigen aber infolge ihrer niedrigen Grundreflektivität in den dünnen Farbstoffschichten zusätzlich eine Reflektorschicht, um die Funktionsfähigkeit des optischen Speichers zu gewährleisten. Hierzu werden dünne Metallschichten, insbesondere solche aus Aluminium verwendet. Diese Metallschichten werden üblicherweise durch Vakuumverdampfen auf den Träger aufgebracht.

Aufgabe der vorliegenden Erfindung war es, ein neues Speichermedium bereitzustellen, das anstelle der kostspieligen, durch Vakuumverdampfen erzeugten Reflektorschicht eine einfach handzuhabende reflektierende Schicht aufweist. Das Speichersystem sollte außerdem mit den gängigen Beschichtungsverfahren (Spincoating oder Tauchen) herstellbar sein, über ausreichende Reflektivität und Absorption bei der Laserlichtwellenlänge verfügen und hohe Stabilität unter Anwendungsbedingungen aufweisen.

Es wurde nun ein neues optisches Aufzeichnungsmedium gefunden, enthaltend eine Speicherschicht, die als strahlungsempfindliches Material einen oder mehrere Farbstoffe enthält, eine Substratschicht I und gegebenenfalls eine oder zwei zusätzliche Substratschichten II, wobei die Substratschicht I im wesentlichen aus reflektierendem Graphit besteht.

Reflektierender Graphit eignet sich aufgrund seiner Oberflächenqualität besonders gut als Substratmaterial, da an ihm eine hohe Lichtreflektion auftritt. Im erfindungsgemäßen optischen Aufzeichnungsmedium dient das Graphitsubstrat I als Reflektor. Bei ausreichender Schichtdicke kann die Graphitschicht gleichzeitig auch als Träger dienen.

Ein optisches Aufzeichnungsmedium, das Graphit als Speichermaterial enthält, ist Gegenstand der älteren aber nicht vorveröffentlichen EP-A-229 650.

Ausgangsmaterialien für die im wesentlichen aus reflektierendem Graphit bestehende Substratschicht I des erfindungsgemäßen optischen Aufzeichungsmediums sind Graphitfolien, wie sie beispielsweise in Kirk-Othmer, Encyclopedia of Chemical Technology, 3rd Ed., Vol. 16, Seite 716, beschrieben sind.

Aus diesen Graphitfolien wird nach an sich bekannten Methoden zunächst ein Rohling ausgestanzt. Der Rohling besitzt vorzugsweise die Gestalt einer Scheibe, die ein Innenloch aufweist und deren Durchmesser beispielsweise 10 bis 30 cm beträgt. Er kann jedoch auch die Gestalt einer Karte, beispielsweise mit den Ausmaßen 8,5 × 5,4 cm, besitzen.

Anschließend wird der Rohling in einem an sich bekannten Preßwerkzeug, beispielsweise in einer Metallpresse, die polierte Preßflächen besitzt, unter Druck gepreßt. Der Preßvorgang findet üblicherweise bei Raumtemperatur statt. Der jeweils optimale Druck, der 300 bis 8000 bar, vorzugsweise 500 bis 5000 bar und insbesondere 700 bis 1000 bar beträgt, richtet sich nach der Art des verwendeten Folienmaterials und nach der Fläche des Graphitrohlings. Beim Preßvorgang werden die vororientierten Graphitdomänen (Schichtstrukturen) weiter ausgerichtet und die Oberfläche homogenisiert, wobei ein metallischer Glanz

auftritt. Auf diese Weise gelangt man zu reflektierendem Graphit. Es ist dann möglich, auch noch einen zweiten Preßvorgang anzuschließen, wobei durch Verwendung eines Masters eine Spurinformation auf die Graphitschicht gebracht werden kann.

Strahlungsempfindliche Materialien, die in der Speicherschicht enthalten sind und die die eingestrahlte Strahlung absorbieren sind Farbstoffe. Als Farbstoffe kommen alle Verbindungen in Betracht, die bei der Wellenlänge des verwendeten Laserlichtes eine ausreichende Absorption aufweisen. Im Falle der Halbleiterlaser sind dies beispielsweise Phthalocyanine (z.B. beschrieben in EP-A-84 729 oder US-A-4 458 004), Dithiolenkomplexe (z.B. beschrieben in DE-A-3 505 751 oder US-A-4 320 489), Chrom-, Kobalt-oder Mangan-Komplexe mit Dihydroxyazoliganden (z.B. beschrieben in JP-A-11385/1985), Methinfarbstoffe (z.B. beschrieben in US-A 4 460 665), Indigoderivate, Anthrachinone (z.B. beschrieben in JP-A-118 492/1986), Naphthochinone (z.B. beschrieben in EP-A-97 929) oder Trichinoncyclopropane (z.B. beschrieben in DE-A-3 507 379).

Die Farbstoffe können unter vermindertem Druck auf die reflektierende Graphitschicht aufgedampft werden. Vorzugsweise wird aber eine Lösung der betreffenden Farbstoffe, die gegebenenfalls Bindemittel und/oder andere Hilfsmittel, wie Antioxidantien, die die Stabilität der Farbstoffe erhöhen, enthält, direkt auf die reflektierende Graphitschicht geschleudert (Spincoating). Es ist aber auch möglich den Farbstoff aufzurakeln oder durch Tauchen des reflektierenden Graphits in die Farbstofflösung auf die Graphitoberfläche aufzutragen. Die Tauchbeschichtung wird vorzugsweise dann durchgeführt, wenn das Graphitsubstrat die Form einer Karte besitzt.

Für den Fall, daß die auf das Graphitsubstrat I aufgebrachte Farbstoffschicht dort unzureichend haftet, empfiehlt es sich, durch Tauchen oder Rakeln zunächst eine Haftvermittlerschicht, z. B. in Form eines Acrylatklebers auf das Graphitsubstrat aufzubringen.

Wegen der großen Chemoresistenz von Graphit können alle Lösungsmittel verwendet werden, in denen sich die Farbstoffe, sowie gegebenenfalls Bindemittel und weitere Hilfsmittel gut lösen und welche ein zu Erzeugung homogener Schichten optimales Verdunstungsverhalten zeigen. Beispielhaft seien folgende Lösungsmittel genannt Bromoform, Ethanol, Methylethylketon, Toluol, Trichlorethan oder Xylol.

Als Bindemittel kommen entweder durch Strahlung oder Wärme härtbare Harze, z. B. Photopolymere, Siliconharze, Epoxidharze oder thermoplastische Kunststoffe infrage, die die Langzeitstabilität der amorphen Farbstoffschichten erhöhen. Bevorzugt sind thermoplastische Kunststoffe mit keinem oder nur sehr geringem kristallinen Anteil und Glastemperaturen von > 35 °C, insbesondere > 75 °C. Geeignet sind beispielsweise wasserunlösliche Bindemittel mit hohem Lösungsvermögen für die eingesetzten Farbstoffe, wie (Meth-)Acrylatpolymere oder -copolymere, Polystyrolhomo-oder -copolymerisate, Polyvinylcarbazol, Polyvinylestercopolymere, Polyvinylchlorid oder Celluloseester. Besonders geeignet sind polymere Klebstoffe, welche nicht nur die Morphologiestabilität der Farbstoffschichten erhöhen, sondern auch eine optimale Haftung der Farbstoffschicht auf der glatten Graphitoberfläche gewähren.

Zum Schutz der Speicheroberfläche und der später eingeschriebenen Informationen kann diese mit einem Lack überschichtet oder mit einer Folie überklebt werden. Vorzugsweise wird sie jedoch mit einer zusätzlichen Substratschicht II verklebt, welche zur gleichzeitigen mechanischen Stabilisierung des Speichers dient. Dies gilt insbesondere dann, wenn wie oben ausgeführt, die Graphitschicht I so dünn ist, daß sie nur als Reflektor nicht jedoch als Träger dient.

Als zusätzliche Substratschicht II kommen alle diejenigen Materialien (Glas oder Polymermaterialien) in Betracht, die ausreichende optische Qualitäten aufweisen. Vorzugsweise verwendet man eine zusätzliche Substratschicht aus Polymermaterial. Besonders bevorzugt ist dabei eine zusätzliche Substratschicht II, die im wesentlichen aus Polymethylmethacrylat (PMMA) oder Polycarbonat besteht.

Die zusätzliche Substratschicht II kann in einem zweiten Preßvorgang unter analogen Preßbedingungen, z.B. in Form einer Diskette mit einer Dicke von 0,2 cm, auf die mit der strahlungsempfindlichen Schicht versehenen Graphitschicht I aufgepreßt werden. Um ein optimales Haftvermögen der zusätzlichen Substratschicht II auf der Speicherschicht zu erhalten, kann dabei ein Klebstoff verwendet werden, um so ein Ankleben der zusätzlichen Substratschicht II zu erreichen. Als Klebstoffe kommen dabei die üblichen, an sich bekannten Materialien, wie sie beispielsweise in Ullmanns Enzyklopädie der technischen Chemie, 4. Auflage, Band 14, Seite 227f., beschrieben sind, in Betracht.

Es kann auch eine zusätzliche Substratschicht II in vorgerillter Form verwendet werden, um auf diese Weise eine Spurführung und schnellen Datenzugriff zu ermöglichen. Je nach Herstellungsbedingungen des Speichers können dabei die Rillen in der zusätzlichen Substratschicht II frei bleiben oder mit einem Material mit höherem Brechungsindex (z.B. Klebstoff) ausgefüllt werden.

Durch beidseitige Beschichtung des reflektierenden Graphitsubstrates I, welches als dickenunabhängiger Reflektor dient, jeweils mit einem strahlungsempfindlichen Beschichtungsfilm und gegebenenfalls einer darüberliegenden Schutzschicht, vorzugsweise einer zusätzlichen Substratschicht II, kann ein

optischer Speicher mit doppelter Speicherkapazität erhalten werden.

Das erfindungsgemäße optische Aufzeichungsmedium kann auf einfache Weise erhalten werden und stellt ein billiges Speichermedium dar, welches gegenüber mechanischen, thermischen und chemischen Belastungen sehr stabil ist und zudem von Laserlichtstrahlen in einem weiten Wellenlängenbereich und mit unterschiedlicher Lichtenergie ausgelesen werden kann.

Die Erfindung wird durch die folgenden Beispiele näher erläutert:

Beispiel 1:

Aus einer Graphitfolie von 0,8 mm Dicke wurden mittels einer Stanzmaschine Scheiben von 100 mm Durchmesser ausgestanzt. Diese Rohlinge wurden in einer Metallpresse mit zentriertem Innenloch (15 mm Durchmesser), deren Preßflächen jeweils poliert waren, bei einem Druck von 750 bar gepreßt. Die so erhaltenen Graphitscheiben lösten sich problemlos von der Presse und zeigten im Wellenlängenbereich von 500 bis 1200 nm eine Grundreflektivität von ca. 30 Prozent (± 5 %).

Die Graphitscheibe wurde anschließend in einem Beschichtungsgerät mit einer Lösung von 3 g Farbstoff 1 der Formel

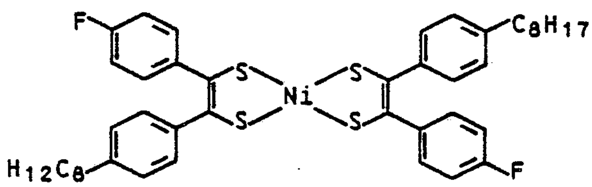

und 1 g Bindemittel auf Basis Polymethylmethacrylat (PMMA) in 100 ml Toluol bei 1000 U/min beschichtet. Nach dem vollständigen Trocknen der Schicht wurde am Innen-und Außenrand mit einem Acrylat-Klebstoff eine PMMA-Scheibe (Durchmesser 100 mm) aufgeklebt. Der so hergestellte optische Speicher ließ sich mit einem GaAlAs-Halbleiterlaser-Laufwerk (λ = 780 mm) beschreiben und die eingeschriebenen Informationen konnten wieder ausgelesen werden. Die Information blieb bei den üblichen Stabilitätstests (Temperatur-/Feuchtigkeits-und Lösungsmittelbelastung) erhalten.

Weitere analog Beispiel 1 dargestellte Speicherschichten sind in der folgenden Tabelle 1 zusammengefaßt.

Tabelle 1:

| Bsp.-Nr. | Farbstoff Nr. | Struktur | Bindemittel |
|---|---|---|---|
| 2 | 1 | | Methylmetharcylat-Methacrylsäure Copolymerisat (MMA-MAS) |
| 3 | 1 | | Nitrocellulose |
| 4 | 1 | | Polystyrol |
| 5 | 2 | 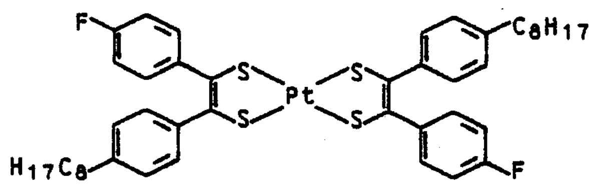 | Polystyrol |
| 6 | 2 | | MMA-MAS |
| 7 | 3 | 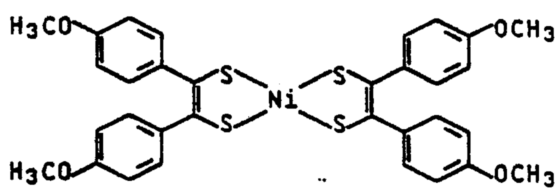 | Polystyrol |
| 8 | 4 | 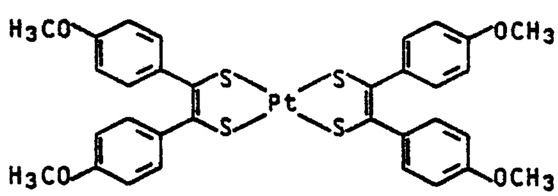 | Polysytrol |
| 9 | 5 | 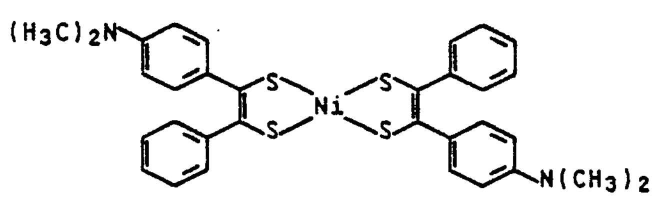 | PMMA |

Tabelle 1 (Fortsetzung)

| Bsp.-Nr. | Farbstoff Nr. | Struktur | Bindemittel |
|---|---|---|---|
| 10 | 6 | 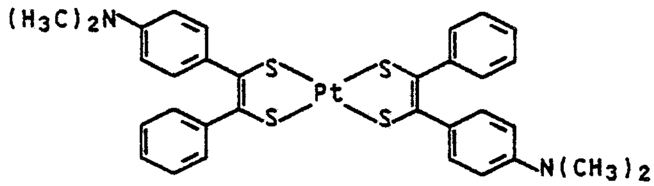 | PMMA |
| 11 | 7 | 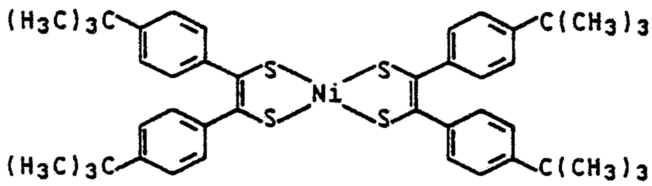 | PMMA |
| 12 | 8 | 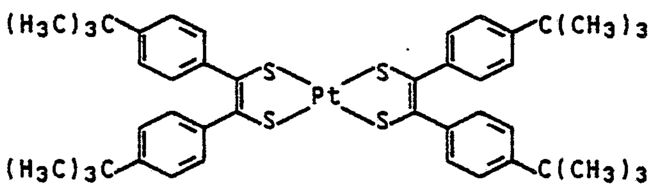 | PMMA |
| 13 | 9 | 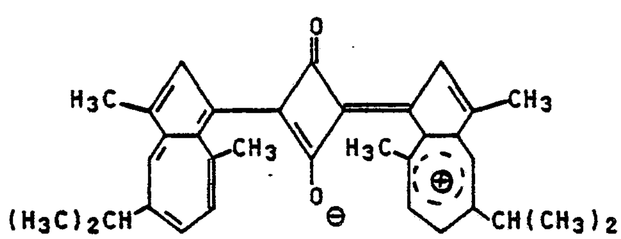 | PMMA |
| 14 | 9 | | Nitrocellulose |
| 15 | 10 | 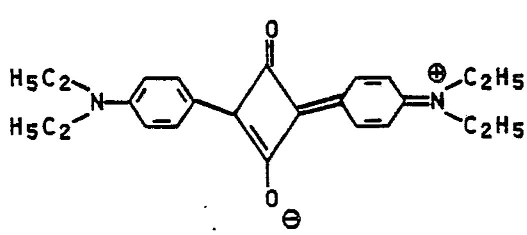 | PMMA |

Tabelle 1 (Fortsetzung)

| Bsp.-Nr. | Farbstoff Nr. | Struktur | Bindemittel |
|---|---|---|---|
| 16 | 11 | Tetra-(tert-butyl)-vanadyl-phthalocyanin | PMMA |
| 17 | 12 | 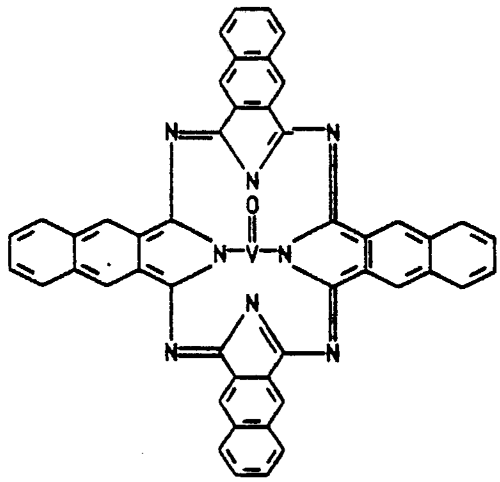 | PMMA |
| 18 | 13 | 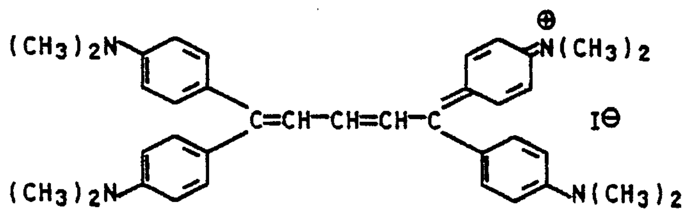 | PMMA |
| 19 | 14 | 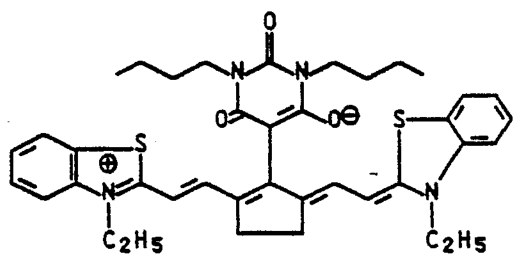 | PMMA |
| 20 | 15 | 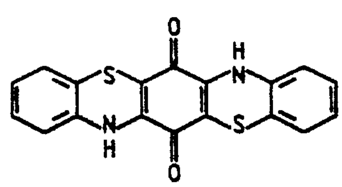 | PMMA |
| 21 | 16 | 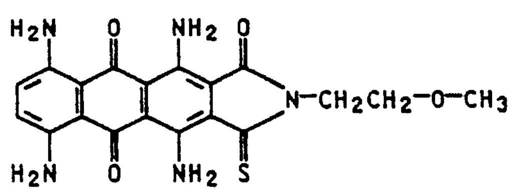 | PMMA |

Beispiel 22:

Eine analog Beispiel 1 hergestellte Graphitfolie wurde auf dem Beschichtungsgerät nacheinander beidseitig mit der Farbstoff-Bindemittel-Lösung gemäß Beispiel 1 beschichtet und dann auf beiden Seiten mit einer PMMA-Diskette verklebt. Der erhaltene optische Speicher wies bei gleicher Qualität die doppelte Speicherkapazität auf.

Beispiel 23:

Ein optischer Speicher wurde analog zu Beispiel 2 aufgebaut, jedoch vor der Schleuderbeschichtung mit der Farbstoff-Bindemittellösung 1 bei 3000 U/min wurde das Graphitsubstrat in ein Acrylatkleberbad getaucht.

Beispiel 24:

Eine Graphitfolie wurde mit 300 bar vorgepreßt, in ein Acrylatkleberbad getaucht und anschließend in eine Farbstoff-Bindemittel-Lösung, enthaltend Farbstoff Nr. 1, getaucht. Nach dem Trocknen der Schicht bei 60 °C wurde in eine wärmehärtbare Harzlösung eingetaucht, durch Vorbeiführen an einer Rotlampe getrocknet und gehärtet. Danach wurden Karten im Format 8,5 × 5,4 cm ausgestanzt und getestet.

Beispiel 25:

Eine analog zu Beispiel 1 hergestellte Graphitscheibe wurde in einer Vakuumaufdampfapparatur mit Vanadylphthalocyanin (Farbstoff Nr. 17) bedampft, bis eine Schichtdicke von 100 nm erreicht war. Die Oberfläche der aufgedampften Absorberschicht wurde durch Verkleben mit einer PMMA-Diskette am Innen- und Außenrand mechanisch geschützt.

Beispiel 26:

Analog zu Beispiel 25 wurden nacheinander beide Seiten der Graphitoberfläche mit Farbstoff Nr. 17 bedampft und die Oberflächen durch Verklebung mit PMMA-Disketten geschützt. Beide Seiten des Speichers zeigten die gleiche Qualität beim Beschreiben und Auslesen der Information mit einem GaAlAs-Laser.

Weitere, analog Beispiel 25 dargestellte Speicherschichten sind in der folgenden Tabelle 2 zusammengefaßt.

Tabelle 2

| Bsp.-Nr. | Farbstoff Nr. | Struktur |
|---|---|---|
| 27 | 18 | 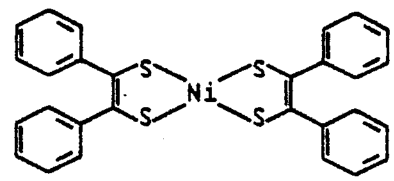 |
| 28 | 19 | 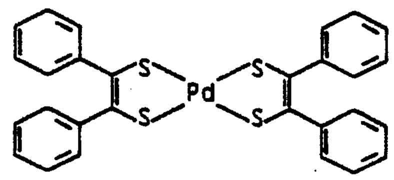 |
| 29 | 20 | 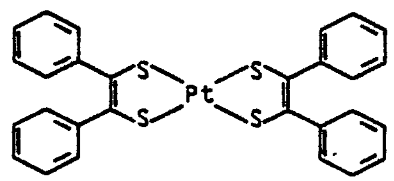 |
| 30 | 21 | 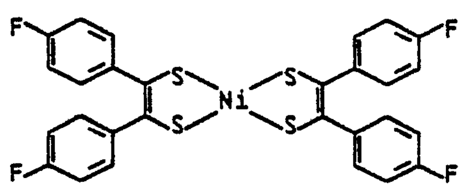 |
| 31 | 22 | 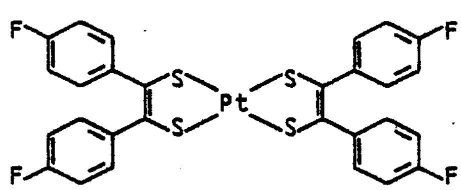 |
| 32 | Gemisch der Farbstoffe 17, 21, 22 | |

Tabelle 2 (Fortsetzung)

| Bsp.-Nr. | Farbstoff Nr. | Struktur |
|---|---|---|
| 33 | 24 | 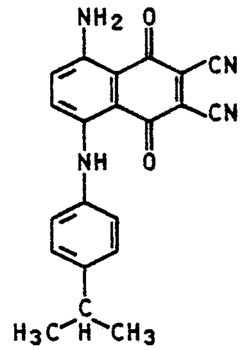 |
| 34 | 25 | 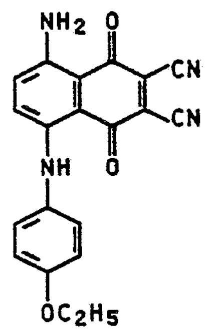 |
| 35 | 26 | 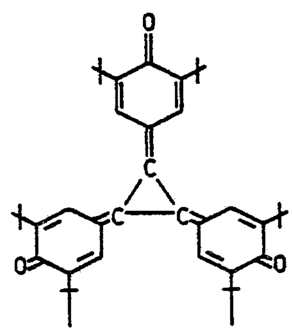 |
| 36 | 27 | 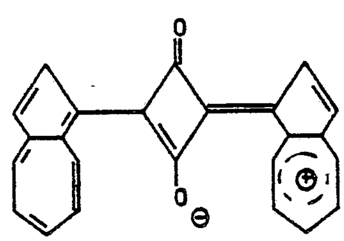 |
| 37 | 28 | 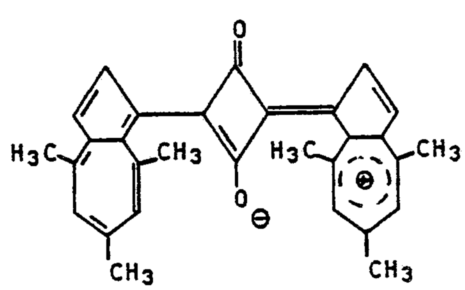 |

## Ansprüche

1. Optisches Aufzeichnungsmedium, enthaltend eine Speicherschicht, die als strahlungsempfindliches Material einen oder mehrere Farbstoffe enthält, eine Substratschicht I und gegebenenfalls eine zusätzliche Substratschicht II, dadurch gekennzeichnet, daß die Substratschicht I im wesentlichen aus reflektierendem Graphit besteht.

2. Optisches Aufzeichnungsmedium gemäß Anspruch 1, dadurch gekennzeichnet, daß es neben der im wesentlichen aus Graphit bestehenden Substratschicht I eine zusätzliche Substratschicht II enthält.

3. Optisches Aufzeichnungsmedium gemäß Anspruch 1, dadurch gekennzeichnet, daß die zusätzliche Substratschicht II im wesentlichen aus Polymethylmethacrylat besteht.

4. Optisches Aufzeichnungsmedium gemäß Anspruch 1, dadurch gekennzeichnet, daß die zusätzliche Substratschicht II im wesentlichen aus Polycarbonat besteht.